# EUROPEAN PATENT APPLICATION

(11) **EP 4 418 807 A1**
(43) Date of publication of application: **21.08.2024**
(21) Application number: 24155645.5
(22) Date of filing: 02.02.2024
(51) Int. Cl.: H04W 76/28, H04W 88/08

(54) **AUTONOMOUS DETERMINATION OF DISCONTINUOUS TRANSMIT OPPORTUNITIES BY ETHERNET BASED RADIOS**

(30) Priority: 10.02.2023 US 202363484399 P; 25.01.2024 US 202418423087
(71) Applicant: Analog Devices International Unlimited Company, Limerick (IE)
(72) Inventor: AL-OBAIDI, Rami Ali, Limerick (IE); GLONDYS, Robert, Limerick (IE)
(74) Representative: Yang, Shu

(57) **Abstract**

Systems and techniques for the autonomous determination of discontinuous transmit opportunities by Ethernet based radios are provided. In one aspect, a radio unit for radio frequency communications includes an input configured to receive a plurality of packets, at least one of the packets including user plane data, and one or more transmit paths configured to receive the user plane data and to output RF signals to one or more antennas. The radio unit can further include a discontinuous transmit monitoring component configured to receive the user plane data and determine a discontinuous transmit state for each of the one or more transmit paths based on the user plane data.

## Description

### CROSS-REFERENCE TO RELATED APPLICATION(S)

Any and all applications for which a foreign or domestic priority claim is identified in the Application Data Sheet as filed with the present application are hereby incorporated by reference under 37 CFR 1.57.

This application claims the benefit of priority of U.S. Provisional Application No. 63/484,399, filed February 10, 2023, and of U.S. Non-Provisional Application No. 18/423,087, filed January 25, 2024, the entire disclosures of which are incorporated herein by reference in its entirety.

### BACKGROUND

### Field

The disclosed technology relates generally to radios and more particularly to discontinuous transmit signals used by Ethernet based radios.

### Description of the Related Technology

Open radio access network (O-RAN) is a communication standard that can employ Ethernet for communications between an O-RAN radio unit (O-RU) and an O-RAN distributed unit (O-DU).

### SUMMARY OF SOME ASPECTS OF THE DISCLOSURE

In one aspect, a radio unit for radio frequency communications, comprises: an input configured to receive a plurality of packets, at least one of the packets including user plane data; one or more transmit paths configured to receive the user plane data and to output radio frequency (RF) signals for transmission on one or more antennas; and a discontinuous transmit monitoring component configured to receive the user plane data and to determine a discontinuous transmit state for each of the one or more transmit paths based on the user plane data.

In some embodiments, each of the one or more transmit paths is further configured to turn on and turn off based on the corresponding discontinuous transmit state.

In some embodiments, the radio unit further comprises: a data jitter buffer configured to receive the user plane data from the input and to provide the user plane data to each of the one or more transmit paths and the discontinuous transmit monitoring component.

In some embodiments, the data jitter buffer is further configured to output the user plane data at a substantially fixed rate.

In some embodiments, the discontinuous transmit monitoring component is further configured to set the discontinuous transmit state to be one of a first discontinuous transmit state in which the corresponding transmit path is to be turned off in response to the user plane data containing no data or a second discontinuous transmit state in which the corresponding transmit path is to be turned on in response to the user plane containing data.

In some embodiments, the discontinuous transmit monitoring component is further configured to provide the discontinuous transmit state to one or more power amplifiers coupled to the one or more antennas.

In some embodiments, the input is further configured to receive the packets from a distributed unit via Ethernet.

In another aspect, a method of deriving a discontinuous transmit state within a radio unit, the method comprising: receiving a plurality of packets at an input of a radio unit, at least one of the packets including user plane data; processing the user plane data using one or more transmit paths to generate one or more RF transmit signals; transmitting the RF transmit signals using one or more antennas; and deriving a discontinuous transmit state for each of the one or more transmit paths based on the user plane data.

In some embodiments, the method further comprises: turning on and turning off each of the one or more transmit paths based on the corresponding discontinuous transmit state.

In some embodiments, the method further comprises: receiving the user plane data from the input at a data jitter buffer; and providing the user plane data from the data jitter buffer to each of the one or more transmit paths.

In some embodiments, the method further comprises: outputting, from the data jitter buffer, the user plane data at a substantially fixed rate.

In some embodiments, the deriving of the discontinuous transmit state includes setting the discontinuous transmit state in one of: a first discontinuous transmit state in which the corresponding transmit paths are to be turned off in response to the user plane data containing no data; or a second discontinuous transmit state in which the corresponding transmit paths are to be turned on in response to the user plane containing data.

In some embodiments, the method further comprises: providing the discontinuous transmit states to one or more power amplifiers that are coupled to the one or more antennas.

In some embodiments, the receiving of the plurality of packets includes receiving the packets from a distributed unit via Ethernet.

In still another aspect, an open radio access network (O-RAN), comprises: a distributed unit configured to output a plurality of packets, at least one of the packets including user plane data; a radio unit configured to receive the packets from the distributed unit and generate a radio frequency (RF) signals based on the user plane data; and one or more antennas configured to receive the RF signals from the radio unit and wireless transmit the RF signals, wherein the radio unit comprises: one or more transmit paths configured to receive the user plane data and to generate the RF signals; and a discontinuous transmit monitoring component configured to receive the user plane data and to determine a discontinuous transmit state for each of the one or more transmit paths based on the user plane data.

In some embodiments, each of the one or more transmit paths is further configured to turn on and turn off based on the corresponding discontinuous transmit state.

In some embodiments, the O-RAN further comprises: a data jitter buffer configured to receive the user plane data and to provide the user plane data to each of the one or more transmit paths and the discontinuous transmit monitoring component.

In some embodiments, the data jitter buffer is further configured to output the user plane data at a substantially fixed rate.

In some embodiments, the discontinuous transmit monitoring component is further configured to set the discontinuous transmit state to be one of a first discontinuous transmit state in which the corresponding transmit path is to be turned off in response to the user plane data containing no data or a second discontinuous transmit state in which the corresponding transmit path is to be turned on in response to the user plane containing data.

In some embodiments, the discontinuous transmit monitoring component is further configured to provide the discontinuous transmit state to one or more power amplifiers coupled to the one or more antennas.

### BRIEF DESCRIPTION OF THE DRAWINGS

These drawings and the associated description herein are provided to illustrate specific embodiments of the invention and are not intended to be limiting.
**FIG. 1A** illustrates an example wireless telecommunication system.
**FIG. 1B** illustrates an example of a RAN.
**FIG. 2** illustrates an example of an O-RAN which can be used as part of a telecommunication system.
**FIG. 3** provides an illustration of the communications between a distributed unit and a radio unit when transmitting radio frequency signals using an O-RAN system.
**FIG. 4A** illustrates one example embodiment of a radio unit in accordance with aspects of this disclosure.
**FIG. 4B** illustrates one example embodiment of the connections between components of the radio unit in accordance with aspects of this disclosure.
**FIG. 5** illustrates a method for deriving a discontinuous transmit state in accordance with aspects of this disclosure.

### DETAILED DESCRIPTION

Various aspects of the novel systems, apparatuses, and methods are described more fully hereinafter with reference to the accompanying drawings. Aspects of this disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the novel systems, apparatuses, and methods disclosed herein, whether implemented independently of or combined with any other aspect. For example, an apparatus may be implemented or a method may be practiced using any number of the aspects set forth herein. In addition, the scope is intended to encompass such an apparatus or method which is practiced using other structure, functionality, or structure and functionality in addition to or other than the various aspects set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wired and wireless technologies, system configurations, networks, including optical networks, hard disks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

In this description, reference is made to the drawings where like reference numerals can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings.

### Introduction to radio access network (RAN)

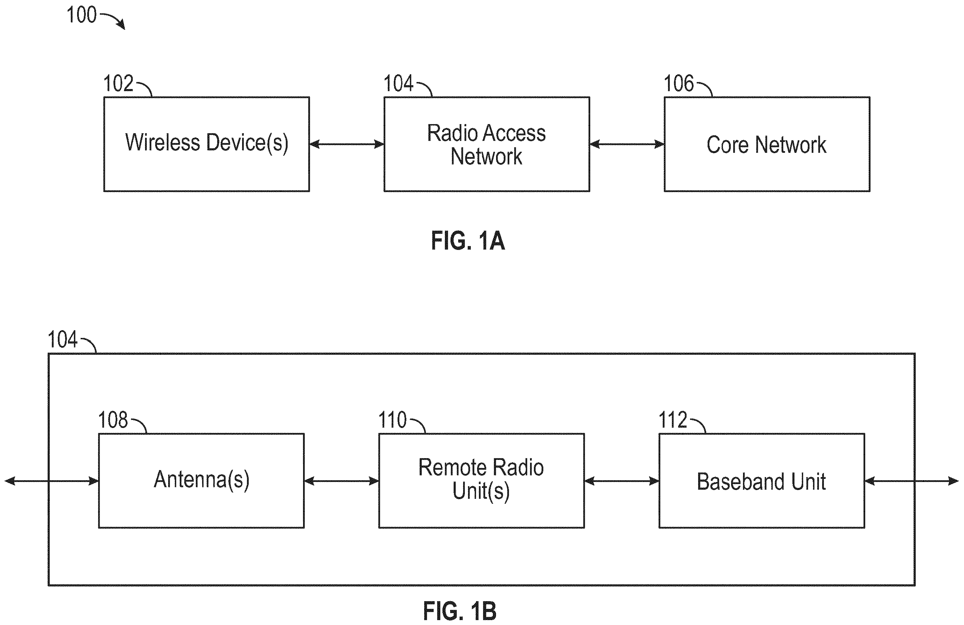

**FIG. 1A** illustrates an example wireless telecommunication system 100. The wireless telecommunication system 100 includes one or more wireless device(s) 102, a radio access network (RAN) 104, and a core network (CN) 106. As used herein, a RAN 104 generally refers to a network used as a part of the wireless telecommunication system 100. The RAN 104 can be used to connect the one or more wireless device(s) 102, such as mobile phones, to the CN 106 of the telecommunication system 100.

**FIG. 1B** illustrates an example of a RAN 104. In some embodiments, the RAN 104 can include a baseband unit (BBU) 112 that is connected to one or more remote radio units (RRUs) 110 positioned near one or more antenna(s) 108. The BBU 112 can be configured to communicate with the CN 106, while the antenna(s) 108 can be configured to communicate with the wireless device(s) 102.

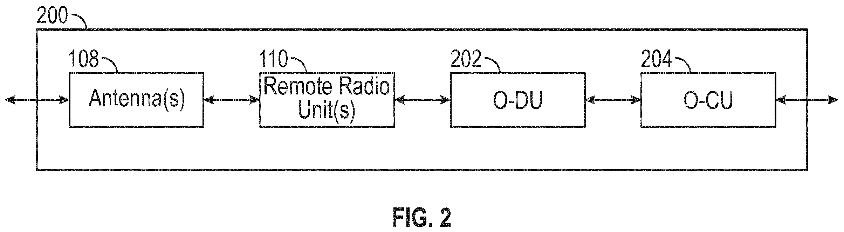

**FIG. 2** illustrates an example of an O-RAN 200 which can be used as part of a telecommunication system. As used herein, O-RAN 200 generally refers to a type of RAN that, among other things, can employ Ethernet for communications between components of the O-RAN 200. In some embodiments, the BBU from a RAN can be replaced with two components in the O-RAN 200, a distributed unit (DU, also referred to as O-DU) 202 and a central unit (CU, also referred to as O-CU) 204. In some embodiments, the distributed unit 202 and the central unit 204 can be connected and communicate via Ethernet.

The O-RAN 200 can communication distinct control plane (CP) and user plane (UP) information with the radio unit (RU, also referred to as O-RU) 110 to be transmitted or received using radio frequency (RF) signals. The control plane can be used to communicate the presence or the absence of downlink data scheduling. The user plane can provide the data to be transmitted. As described herein, the radio unit 110 can include RF circuitry configured to amplify and/or convert the user plane data into RF signals that can be transmitted by the one or more antenna(s) 108. In some embodiments, the RF circuity can include, for example: a fast Fourier transform (FFT) block, a digital-to-analog converter (DAC), a mixer, a variable gain amplifier, a phase shifter, a power amplifier, etc. The transmit paths may use relatively large amounts of power to amplify the RF signals to powers sufficient for the distances used for wireless RF communications, and thus, turning off transmit paths when they are not currently being used for RF communications can reduce power consumption of the O-RAN 200.

The use of Ethernet within the O-RAN 200 can introduce certain challenges. For example, since Ethernet is a packet-based communication standard, it is possible for individual packets to be lost. This can lead to undesirable functionality of the system when a component, such as the radio unit 110, does not receive the expected lost data packets.

The O-RAN 200 can also employ discontinuous transmit (DTX) to reduce power consumption when radio frequency signals are not being transmitted by a given antenna 108 or channel of the radio unit 110. The O-RAN 200 can also employ discontinuous receive (DRX) to protect sensitive components when radio frequency signals are not being received by a given antenna 108 or channel of the radio unit 110.

### Discontinuous Transmit Signaling in O-RAN

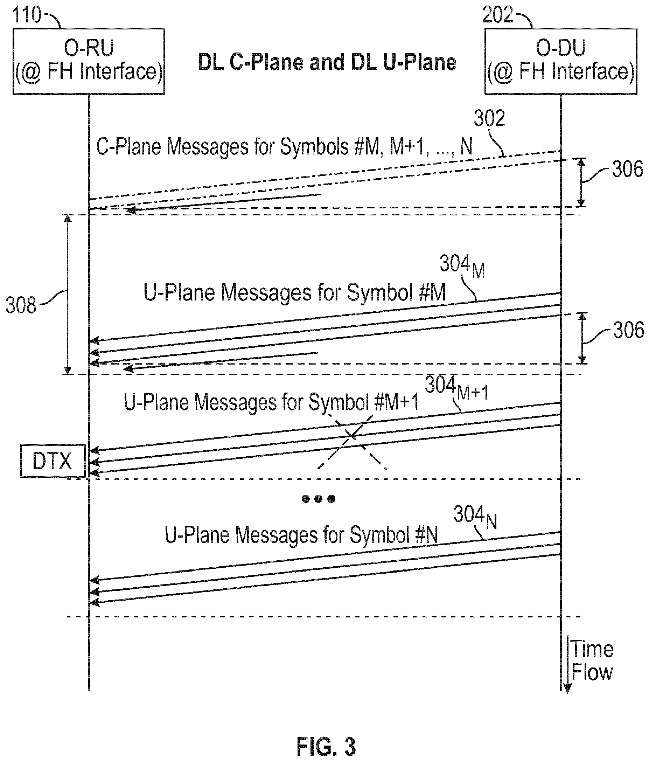

**FIG. 3** provides an illustration of the communications between a distributed unit 202 and a radio unit 110 when transmitting radio frequency signals using an O-RAN 200 system. The distributed unit 202 can provide a discontinuous transmit signal, or DTX signal, which can be used by the radio unit 110 to turn off certain components of the RF circuitry for a corresponding channel or transmit path of the radio unit 110 at times when there is no data (e.g., data in the user plane) to be wirelessly transmitted.

The state of the discontinuous transmit signal can be determined or derived directly from control information such as a pre-determined schedule (for instance, a time division duplexing or TDD transmit/receive schedule) or real time control information. In the context of O-RAN, the Ethernet based network can provide the control plane and user plane information to radio units 110, for example, via the distributed unit 202. The control plane can be used to signal or indicate the absence or presence of downlink data scheduling to follow in the user plane. The user plane can provide the data to be transmitted.

However, relying on a control or a pre-determined schedule to drive discontinuous transmit signaling may be less accurate than relying directly on the user data contained in the user plane. This is especially the case when using packet-based networks, such as Ethernet, since it is possible that the packets including the user data may end up being lost or discarded, while the corresponding control plane packets are received by the radio unit 110. This can result in the radio unit 110 being instructed to maintain an active transmit path, even when no data is received on the user plane. The transmit paths may use relatively large amounts of power to transmit RF signals at the distances used for wireless RF communications. Thus, when transmit paths remain on without transmitting any data, these transmit paths may consume power without transmitting any RF signals.

**FIG. 3** illustrates one example situation in which packet loss may result in one or more transmit paths of the radio unit 110 remaining on when a packet containing user plane data is lost. In particular, the distributed unit 202 can provide control plane messages 302 to the radio unit 110 for a plurality of symbols M, M+1, ..., N. The distributed unit 202 can also provide packets 304_{M}, 304_{M+1}, ..., 304_{N} containing user plane messages to the radio unit 110 for the symbols M, M+1, ..., N. In some embodiments, the control plane messages 302 and each of the packets 304_{M}, 304_{M+1}, ..., 304_{N} may experience a certain amount of network delay 306 between being output from the distributed unit 202 and received by the radio unit 110. The time delay 308 between receiving the control plane messages 302 and receiving the first packet 304_{M} may be the minimum amount of time the radio unit 110 has to prepare for processing the first packet 304_{M} received from the distributed unit 202.

In one example, the packet 304_{M+1} containing user plane data for the symbol M+1 may be lost. However, since the control plane data 302 indicated that the distributed unit 202 would be sending a packet 304_{M+1} with user plane data for the symbol M+1, the radio unit 110 may leave the corresponding transmit paths on based on the control plane data 302, even though the user plane data for the symbol M+1 is not received at the expected time.

Aspects of this disclosure can increase the efficiency of radio units 110 by turning off transmit paths when there is no data on the user plane by deriving the discontinuous transmit state directly from the user plane data. In some embodiments, a transmit path can be turned off by biasing the power amplifier(s) used to amplify RF transmit signals to an off state. By deriving the discontinuous transmit state directly from the user plane data, in circumstances such as congestion in the Ethernet based network that may cause user plane data outages, the radio unit can 110 assert of the discontinuous transmit state to conserve power. In contrast, in implementations in which the discontinuous transmit state is derived from a pre-determined schedule or from control plane 302 information, the radio unit 110 may maintain an active transmit state even when no data is received on the user plane.

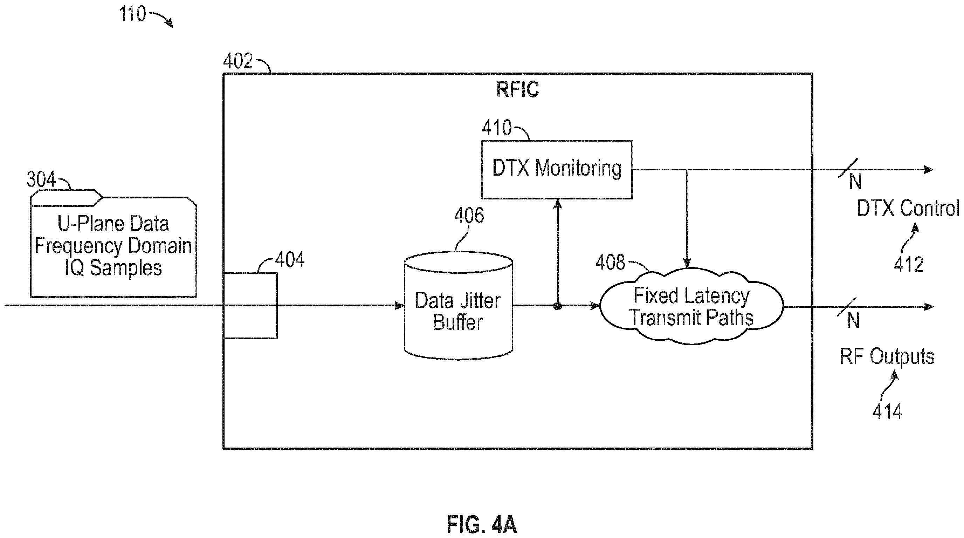

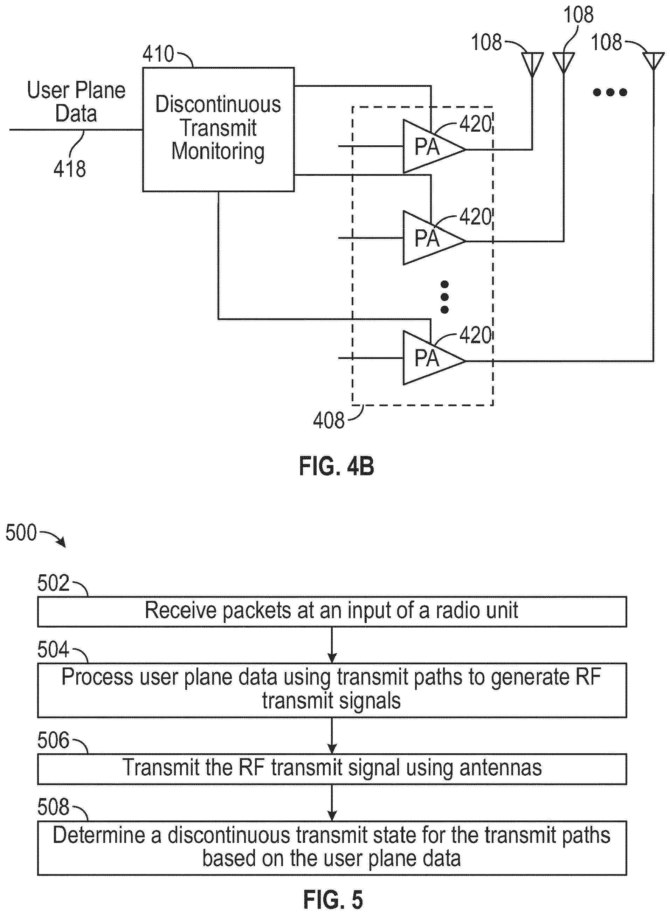

**FIG. 4A** illustrates one example embodiment of a radio unit 110 in accordance with aspects of this disclosure. **FIG. 4B** illustrates one example embodiment of the connections between components of the radio unit 110 in accordance with aspects of this disclosure. With reference to **FIGs. 4A** and **4B****,** the radio unit 110 includes a radio head 402 (also referred to as a radio frequency integrated circuit (RFIC)). The radio head 402 includes an input 404 (e.g., an Ethernet port), a data jitter buffer 406, a plurality of transmit paths 408, a discontinuous transmit state monitoring component 410, one or more discontinuous transmit control outputs 412, and one or more RF outputs 414. The input 404 is configured to receive packets 304 containing user plane data 418. In some embodiments, the user plane data 418 can include frequency domain IQ samples. However, in other embodiments, the user data 418 can be provided in other forms without departing from aspects of this disclosure.

The data jitter buffer 406 is configured to buffer the user plane data 418 to prevent jitter introduced, for example, by Ethernet communication from affecting the components downstream from the data jitter buffer 406. The data jitter buffer 406 can provide the buffered user plane data 418 to the transmit paths 408 and the discontinuous transmit monitoring component 410 at a rate expected by the transmit paths 408. In some embodiments, the data jitter buffer 406 can provide the buffered user plane data 418 at a substantially fixed rate.

The transmit paths 408 are configured to receive the user plane data 418 from the data jitter buffer 406 and amplify/convert the data into RF signals that can be transmitted by one or more antenna(s) 108. In some embodiments, each of the transmit paths 408 can include: an FFT block, a digital-to-analog converter (DAC), a mixer, a variable gain amplifier, a phase shifter, a power amplifier 420, etc. These components can be configured to convert the frequency domain IQ samples of the user data into analog signals at RF that can be transmitted by the antenna(s). The transmit paths 408 may have a substantially fixed latency between receiving data from the data jitter buffer 406 and output the RF data to the antenna(s) via the RF outputs 414. In some embodiments, each of the transmit paths 408 can be coupled to a corresponding one of the antennas 108 via a physical antenna path.

The discontinuous transmit monitoring component 410 is configured to determine or derive the discontinuous transmit state from the user plane data 418 received from the data jitter block 406. For example, the discontinuous transmit monitoring component 410 can determine or derive a first discontinuous transmit state in which the corresponding transmit path(s) 408 are to be turned off in response to the user plane containing no data. In some cases, the user plane may contain no data when the control plane messages indicate that no user plane messages are scheduled. In other cases, the user plane may contain no data when a packet containing the user plane data has been lost.

Similarly, the discontinuous transmit monitoring component 410 can determine or derive a second discontinuous transmit state in which the corresponding transmit paths are to be turned on in response to the user plane data 418 containing data to be transmitted. The discontinuous transmit monitoring component 410 can then generate a plurality of discontinuous transmit control signals that indicate the determined discontinuous transmit states. Each of the discontinuous transmit signals may correspond to one of the RF outputs 414 generated by the transmit paths 408. The discontinuous transmit monitoring component 410 can also provide the discontinuous transmit control signals to the corresponding transmit paths 408. For example, as shown in **FIG. 4B****,** the discontinuous transmit monitoring component 410 can provide the discontinuous transmit control signals to the power amplifiers 420 included in the transmit paths 408 (and/or power amplifiers downstream from the RF outputs 414) such that the transmit paths 408 can be turned off when there is no user data to be transmitted.

Depending on the embodiment, the discontinuous transmit monitoring component 410 can be implemented in hardware (e.g., using discrete circuity) and/or in software running on a processor or other circuit (e.g., a digital signal processor (DSP), an application specific integrated circuit (ASIC), a field programmable gate array (FPGA) or other programmable logic device).

By monitoring the transfer of user plane data into the fixed latency transmit paths 408 within the radio unit 110, the discontinuous transmit monitoring component 410 can determine or derive the discontinuous transmit state independently for each physical antenna path/transmit path 408. The radio unit 110 can output the discontinuous transmit state control signals per antenna path with a configurable delay to match misc.

**FIG. 5** illustrates a method 500 for determining or deriving a discontinuous transmit state in accordance with aspects of this disclosure. One or more blocks of the method 500 may be implemented, for example, by a radio unit (e.g., the radio unit 110 of **FIG. 4****)** and/or an O-RAN (e.g., the O-RAN 200 of **FIG. 2**).

At block 502, an input of a radio unit can receive a plurality of packets. At least one of the packets can include user plane data. In some embodiments, the input can include an Ethernet port configured to receive the packets.

At block 504, one or more transmit paths can process the user plane data to generate one or more RF transmit signals. The transmit paths can include one or more power amplifiers configured to amplify the RF transmit signals to a power level sufficient for wireless communication. At block 506, one or more antennas can transmit the RF transmit signals.

At block 508, the radio unit can determine a discontinuous transmit state for each of the one or more transmit paths based on the user plane data. In some embodiments, the radio unit can include a discontinuous transmit monitoring component which is configured to determine the discontinuous transmit states. The power amplifiers may be configured to be turned on or off based on the determined discontinuous transmit states to conserve power.

In the foregoing, it will be appreciated that any feature of any one of the embodiments can be combined or substituted with any other feature of any other one of the embodiments.

Aspects of this disclosure can be implemented in various electronic devices. Examples of the electronic devices can include, but are not limited to, consumer electronic products, parts of the consumer electronic products, electronic test equipment, cellular communications infrastructure such as a base station, etc. Examples of the electronic devices can include, but are not limited to, a mobile phone such as a smart phone, a wearable computing device such as a smart watch or an ear piece, a telephone, a television, a computer monitor, a computer, a modem, a hand-held computer, a laptop computer, a tablet computer, a personal digital assistant (PDA), a microwave, a refrigerator, a vehicular electronics system such as an automotive electronics system, a stereo system, a DVD player, a CD player, a digital music player such as an MP3 player, a radio, a camcorder, a camera such as a digital camera, a portable memory chip, a washer, a dryer, a washer/dryer, peripheral device, a clock, etc. Further, the electronic devices can include unfinished products.

Unless the context clearly requires otherwise, throughout the description and the claims, the words "comprise," "comprising," "include," "including" and the like are to be construed in an inclusive sense, as opposed to an exclusive or exhaustive sense; that is to say, in the sense of "including, but not limited to." The word "coupled," as generally used herein, refers to two or more elements that may be either directly connected, or connected by way of one or more intermediate elements. Likewise, the word "connected," as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number, respectively. The word "or" in reference to a list of two or more items, that word covers all of the following interpretations of the word: any of the items in the list, all of the items in the list, and any combination of the items in the list.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states. Thus, such conditional language is not generally intended to imply that features, elements and/or states are in any way required for one or more embodiments or whether these features, elements and/or states are included or are to be performed in any particular embodiment.

While certain embodiments have been described, these embodiments have been presented by way of example only, and are not intended to limit the scope of the disclosure. Indeed, the novel apparatus, methods, and systems described herein may be embodied in a variety of other forms; furthermore, various omissions, substitutions and changes in the form of the methods and systems described herein may be made without departing from the spirit of the disclosure. For example, while blocks are presented in a given arrangement, alternative embodiments may perform similar functionalities with different components and/or circuit topologies, and some blocks may be deleted, moved, added, subdivided, combined, and/or modified. Each of these blocks may be implemented in a variety of different ways. Any suitable combination of the elements and acts of the various embodiments described above can be combined to provide further embodiments. The various features and processes described above may be implemented independently of one another, or may be combined in various ways. All possible combinations and subcombinations of features of this disclosure are intended to fall within the scope of this disclosure.

### Numbered aspects

By way of non-limiting example, some aspects of the disclosure are set out in the following numbered clauses.
1. A radio unit for radio frequency communications, comprising:
   an input configured to receive a plurality of packets, at least one of the packets including user plane data;
   one or more transmit paths configured to receive the user plane data and to output radio frequency (RF) signals for transmission on one or more antennas; and
   a discontinuous transmit monitoring component configured to receive the user plane data and to determine a discontinuous transmit state for each of the one or more transmit paths based on the user plane data.
2. The radio unit of Clause 1, wherein each of the one or more transmit paths is further configured to turn on and turn off based on the corresponding discontinuous transmit state.
3. The radio unit of Clause 1 or 2, further comprising:
   a data jitter buffer configured to receive the user plane data from the input and to provide the user plane data to each of the one or more transmit paths and the discontinuous transmit monitoring component.
4. The radio unit of Clause 3, wherein the data jitter buffer is further configured to output the user plane data at a substantially fixed rate.
5. The radio unit of any preceding Clause, wherein the discontinuous transmit monitoring component is further configured to set the discontinuous transmit state to be one of a first discontinuous transmit state in which the corresponding transmit path is to be turned off in response to the user plane data containing no data or a second discontinuous transmit state in which the corresponding transmit path is to be turned on in response to the user plane containing data.
6. The radio unit of any preceding Clause, wherein the discontinuous transmit monitoring component is further configured to provide the discontinuous transmit state to one or more power amplifiers coupled to the one or more antennas.
7. The radio unit of any preceding Clause, wherein the input is further configured to receive the packets from a distributed unit via Ethernet.
8. A method of deriving a discontinuous transmit state within a radio unit, the method comprising:
   receiving a plurality of packets at an input of a radio unit, at least one of the packets including user plane data;
   processing the user plane data using one or more transmit paths to generate one or more RF transmit signals;
   transmitting the RF transmit signals using one or more antennas; and
   deriving a discontinuous transmit state for each of the one or more transmit paths based on the user plane data.
9. The method of Clause 8, wherein further comprising:
   turning on and turning off each of the one or more transmit paths based on the corresponding discontinuous transmit state.
10. The method of Clause 8 or 9, further comprising:
   receiving the user plane data from the input at a data jitter buffer; and
   providing the user plane data from the data jitter buffer to each of the one or more transmit paths.
11. The method of Clause 10, further comprising:
   outputting, from the data jitter buffer, the user plane data at a substantially fixed rate.
12. The method of any of Clauses 8 to 11, wherein the deriving of the discontinuous transmit state includes setting the discontinuous transmit state in one of:
   a first discontinuous transmit state in which the corresponding transmit paths are to be turned off in response to the user plane data containing no data; or
   a second discontinuous transmit state in which the corresponding transmit paths are to be turned on in response to the user plane containing data.
13. The method of any of Clauses 8 to 12, further comprising:
   providing the discontinuous transmit states to one or more power amplifiers that are coupled to the one or more antennas.
14. The method of any of Clauses 8 to 13, wherein the receiving of the plurality of packets includes receiving the packets from a distributed unit via Ethernet.
15. An open radio access network (O-RAN), comprising:
   a distributed unit configured to output a plurality of packets, at least one of the packets including user plane data;
   a radio unit configured to receive the packets from the distributed unit and generate radio frequency (RF) signals based on the user plane data; and
   one or more antennas configured to receive the RF signals from the radio unit and wireless transmit the RF signals,
   wherein the radio unit comprises:
      one or more transmit paths configured to receive the user plane data and to generate the RF signals; and
      a discontinuous transmit monitoring component configured to receive the user plane data and to determine a discontinuous transmit state for each of the one or more transmit paths based on the user plane data.
16. The O-RAN of Clause 15, wherein each of the one or more transmit paths is further configured to turn on and turn off based on the corresponding discontinuous transmit state.
17. The O-RAN of Clause 15 or 16, further comprising:
   a data jitter buffer configured to receive the user plane data and to provide the user plane data to each of the one or more transmit paths and the discontinuous transmit monitoring component.
18. The O-RAN of Clause 17, wherein the data jitter buffer is further configured to output the user plane data at a substantially fixed rate.
19. The O-RAN of any of Clauses 15 to 18, wherein the discontinuous transmit monitoring component is further configured to set the discontinuous transmit state to be one of a first discontinuous transmit state in which the corresponding transmit path is to be turned off in response to the user plane data containing no data or a second discontinuous transmit state in which the corresponding transmit path is to be turned on in response to the user plane containing data.
20. The O-RAN of any of Clauses 15 to 19, wherein the discontinuous transmit monitoring component is further configured to provide the discontinuous transmit state to one or more power amplifiers coupled to the one or more antennas.

## Claims

1. A radio unit for radio frequency communications, comprising:
an input configured to receive a plurality of packets, at least one of the packets including user plane data;
one or more transmit paths configured to receive the user plane data and to output radio frequency (RF) signals for transmission on one or more antennas; and
a discontinuous transmit monitoring component configured to receive the user plane data and to determine a discontinuous transmit state for each of the one or more transmit paths based on the user plane data.

2. The radio unit of Claim 1, wherein each of the one or more transmit paths is further configured to turn on and turn off based on the corresponding discontinuous transmit state.

3. The radio unit of Claim 1 or 2, further comprising:
a data jitter buffer configured to receive the user plane data from the input and to provide the user plane data to each of the one or more transmit paths and the discontinuous transmit monitoring component.

4. The radio unit of Claim 3, wherein the data jitter buffer is further configured to output the user plane data at a substantially fixed rate.

5. The radio unit of any preceding Claim, wherein the discontinuous transmit monitoring component is further configured to set the discontinuous transmit state to be one of a first discontinuous transmit state in which the corresponding transmit path is to be turned off in response to the user plane data containing no data or a second discontinuous transmit state in which the corresponding transmit path is to be turned on in response to the user plane containing data.

6. The radio unit of any preceding Claim, wherein the discontinuous transmit monitoring component is further configured to provide the discontinuous transmit state to one or more power amplifiers coupled to the one or more antennas.

7. The radio unit of any preceding Claim, wherein the input is further configured to receive the packets from a distributed unit via Ethernet.

8. A method of deriving a discontinuous transmit state within a radio unit, the method comprising:
receiving a plurality of packets at an input of a radio unit, at least one of the packets including user plane data;
processing the user plane data using one or more transmit paths to generate one or more RF transmit signals;
transmitting the RF transmit signals using one or more antennas; and
deriving a discontinuous transmit state for each of the one or more transmit paths based on the user plane data.

9. The method of Claim 8, wherein further comprising:
turning on and turning off each of the one or more transmit paths based on the corresponding discontinuous transmit state.

10. The method of Claim 8 or 9, further comprising:
receiving the user plane data from the input at a data jitter buffer; and
providing the user plane data from the data jitter buffer to each of the one or more transmit paths.

11. The method of Claim 10, further comprising:
outputting, from the data jitter buffer, the user plane data at a substantially fixed rate.

12. The method of any of Claims 8 to 11, wherein the deriving of the discontinuous transmit state includes setting the discontinuous transmit state in one of:
a first discontinuous transmit state in which the corresponding transmit paths are to be turned off in response to the user plane data containing no data; or
a second discontinuous transmit state in which the corresponding transmit paths are to be turned on in response to the user plane containing data.

13. The method of any of Claims 8 to 12, further comprising:
providing the discontinuous transmit states to one or more power amplifiers that are coupled to the one or more antennas.

14. The method of any of Claims 8 to 13, wherein the receiving of the plurality of packets includes receiving the packets from a distributed unit via Ethernet.

15. An open radio access network (O-RAN), comprising:
a distributed unit configured to output a plurality of packets, at least one of the packets including user plane data;
a radio unit in accordance with any of Claims 1 to 7, configured to receive the packets from the distributed unit and generate radio frequency (RF) signals based on the user plane data; and
one or more antennas configured to receive the RF signals from the radio unit and wireless transmit the RF signals.
